# EUROPÄISCHE PATENTSCHRIFT

(11) **EP 4 387 836 B1**
(45) Veröffentlichungstag und Bekanntmachung des Hinweises auf die Patenterteilung: **25.06.2025**
(21) Anmeldenummer: 22757839.0
(22) Anmeldetag: 16.08.2022
(51) Int. Cl.: B29C 65/16, B29C 65/78, B29C 65/80, B29C 65/06, B29C 65/08, B29C 65/10, B29C 65/14

(54) **VORRICHTUNG UND VERFAHREN ZUM ZUSAMMENFÜGEN VON ZWEI FÜGEPARTNERN**
DEVICE AND METHOD FOR JOINING TOGETHER TWO JOINING PARTNERS
DISPOSITIF ET PROCÉDÉ POUR ASSEMBLER ENSEMBLE DEUX PARTENAIRES D'ASSEMBLAGE

(30) Priorität: 20.08.2021 DE 102021209203
(43) Veröffentlichungstag der Anmeldung: 26.06.2024
(73) Patentinhaber: Continental Autonomous Mobility Germany GmbH, 85057 Ingolstadt (DE)
(72) Erfinder: KORN, Martin, 90411 Nürnberg (DE); NAHM, Steffen, 90411 Nürnberg (DE); GEHRING, Josef, 90411 Nürnberg (DE); UNTERSEHER, Simon, 90411 Nürnberg (DE); APELSMEIER, Bernhard, 90411 Nürnberg (DE); REGER, Alexander, 90411 Nürnberg (DE); MURMANN, Udo, 90411 Nürnberg (DE)
(74) Vertreter: Continental Corporation
(86) Internationale Anmeldenummer: PCT/DE2022/200186
(87) Internationale Veröffentlichungsnummer: WO 2023/020669

(56) Entgegenhaltungen:
- EP-A1- 1 469 983
- EP-B1- 1 469 983
- WO-A1-2007/147935
- DE-A1- 3 505 272
- US-A- 3 207 049

## Beschreibung

Die vorliegende Erfindung betrifft eine Vorrichtung und ein Verfahren zum Zusammenfügen von zwei Fügepartnern insbesondere durch quasisimultanes Laserschweißen von Kunststoffteilen.

### Technologischer Hintergrund

Kunststoffe oder Kunststoffteile bzw. Werkstücke oder Halbzeuge aus Kunststoff haben in der heutigen Produktion eine besondere Bedeutung. Derartige Kunststoffteile werden in den unterschiedlichsten Gebieten der Technik eingesetzt, wie z. B. auf dem Gebiet der Fahrzeugtechnik, Robotik, Maschinenfertigung Haushaltsgerätetechnik und dergleichen. Hierbei ist es in einzelnen Produktionsschritten oftmals erforderlich, zwei oder mehr Kunststoffteile miteinander zu verbinden. Dies kann beispielsweise durch eine Klebeverbindung oder eine mechanische Befestigungslösung erfolgen, wie z. B. durch Schrauben, Nieten oder Clipsen. Vermehrt wird jedoch Schweißen eingesetzt, um z. B. zwei Bauteile bzw. Fügepartner miteinander insbesondere unlösbar zu verbinden bzw. zusammenzufügen. Hierbei gibt es unterschiedliche Schweißverfahren, die eingesetzt werden können, wie z. B. Laserschweißen, Heißgasschweißen, mittels Heizplatte, Infrarotschweißen, Ultraschallschweißen oder Reibschweißen.

Beim Heißgasschweißen werden die beiden zu verschweißenden Fügepartner in der Regel jeweils in einen produktspezifischen Werkstückträger eingelegt. Dabei öffnen sich sogenannte Vorschubeinheiten und der eigentliche Schweißvorgang wird durch Ausfahren des Heizelements in die Heizposition eingeleitet. Daraufhin erfolgt die diathermische (Durchwärmphase) Phase, in der der Verbindungsbereich bzw. die Fügezone durch Strahlungswärme plastifiziert wird. Der Wärmeübergang vom Heizelement zur Schweißnaht wird durch einen heißen Schutzgasstrom erzwungen. Nachdem die notwendige Schmelzwärme auf das Kunststoffteil aufgebracht wurde, fahren die Vorschübe so weit auseinander, dass das Heizelement von der Arbeits- in die Parkposition fahren kann. Der eigentliche Fügeprozess erfolgt nun durch Schließen der Zuführeinheiten, so dass die plastifizierten, schweißdefinierten Geometrien miteinander verschmolzen werden können. Der vorgegebene Fügeweg wird überwacht und stellt somit das korrekte Endmaß der geschweißten Teile sicher.

Ferner können zwei Kunststoffteile auch mittels einer beheizten Werkzeugplatte miteinander verschweißt werden, wobei eine Schweißrippe oder -raupe an gegenüberliegenden Fügepartnern mit einem beheizten Werkzeug, der Heizplatte, in Kontakt gebracht werden. Die Wärme wird in die Schweißrippe geleitet und bringt diese zum Schmelzen. Die Heizplatte wird dann entfernt und die Fügepartner werden zusammengedrückt, bis sie sich miteinander verbinden. Beim Infrarotschweißen (IR-Schweißen) werden die Fügepartner starr in der Nähe einer infrarotabstrahlenden Platte gehalten, um die Fügeflächen aufzuschmelzen. Die Platte wird entfernt und die Teilehälften werden zusammengetrieben und können unter Druck wieder erstarren. Das Heißgasschweißen, die Heizplatte und das Infrarotschweißen nach dem Stand der Technik haben die Nachteile, dass diese hohe Technologiekosten in Anspruch nehmen und Wärme nicht selektiv für Schweißschnittstellen bereitgestellt werden kann. Zudem sind lange Taktzeiten erforderlich und es wird ein hoher Energieaufwand benötigt.

Bei dem Ultraschallschweißen wird die erforderliche Schweißwärme durch Druck und Ultraschallschwingung zwischen den zu verbindenden Teilen erzeugt. Nach der Plastifizierung erstarrt der geschmolzene Kunststoff unter Druck, wodurch eine homogene Schweißverbindung entsteht. Dieses Verfahren ist jedoch ungeeignet für Baugruppen mit Elektronik im Inneren, da diese durch den Ultraschall beschädigt werden können. Zudem werden Partikel erzeugt, welche zu einer erhöhten Verschmutzung führen können, z. B. auch der Elektronikkomponenten. Beim Reibschweißen wird die erforderliche Schweißwärme durch Druck und Reibung zwischen den zu verbindenden Teilen erzeugt. Nach der Plastifizierung wird das geschmolzene Kunststoffmaterial steif und ergibt eine homogene Schweißverbindung. Jedoch ist auch das Reibschweißen nicht geeignet für einige Baugruppen mit Elektronik im Inneren, da ebenfalls Partikel erzeugt werden.

Das Grundprinzip des Laserschweißens ist ein Laserstrahl, der einen lasertransparenten Fügepartner durchdringt und auf einen absorbierenden Fügepartner fokussiert wird. Der Laserstrahl wird dabei in Wärme umgewandelt und plastifiziert das Material. Das ansteigende Volumen kontaktiert den transparenten Partner. Durch die entstehende Wärmeleitung wird der transparente Fügepartner lokal plastifiziert. Um eine gute Wärmeleitfähigkeit zwischen den beiden Fügepartnern und schließlich eine Schweißverbindung zu erhalten, muss in der Regel eine Fixierplatte angebracht werden, die beide Fügepartner während der Laserbelichtung zusammenpresst. Das Verfahren zum Laserschweißen von Kunststoffen setzt somit einen lasertransparenten Fügepartner und einen laserabsorbierenden Fügepartner voraus. Dadurch, dass eines der Fügeteile bzw. ein Fügepartner lasertransparent sein muss, kann es zu erhöhten Herstellungskosten kommen, da lasertransparente Kunststoffe oftmals kostenaufwendig sind, insbesondere wenn die Kunststoffteile z. B. in schwarzer Farbe ausgestaltet sein sollen.

### Druckschriftlicher Stand der Technik

Aus der CN 107 471 657 A ist ein Laserschweißverfahren zum transmissionsfreien Schweißen von thermoplastischen Kunststoffen bekannt, bei dem zwei nicht-transparente Bauteile per Laser verschweißt werden, wobei diese aber beim Schweißvorgang unter Druck aneinander gehalten werden. Bei dem Laserschweißverfahren werden ein zu verschweißendes oberes Kunststoffteil und ein zu verschweißendes unteres Kunststoffteil derart positioniert, dass das obere Kunststoffmodul und das untere Kunststoffmodul gestapelt und durch Druck zusammengepresst werden. Ein Laserstrahl wird dann auf das obere Kunststoffteil fokussiert, sodass ein Erwärmungsbereich gebildet wird. Der Laserstrahl wird dann so eingestellt, dass die Temperatur des Erwärmungsbereichs niedriger ist als der Schmelzpunkt des oberen Kunststoffteils, aber höher ist als der Schmelzpunkt des unteren Kunststoffteils, so dass die Wärme des Erwärmungsbereichs auf das untere Kunststoffmodul abgestrahlt und entsprechend geschmolzen wird, so dass dieses dann unter der Druckeinwirkung mit dem oberen Kunststoffteil verbunden wird.

Ähnliche Vorrichtungen oder Verfahren sind ferner aus DE 35 05 272 A1, WO 2007/147935 A1 oder US 3 207 049 A bekannt.

Zudem offenbart EP 1 469 983 A1 ein Verfahren zum Zusammenfügen von einem ersten Fügepartner und einem zweiten Fügepartner, wobei der erste Fügepartner in einem ersten Formteil und der zweite Fügepartner in einem zweiten Formteil positioniert werden. Hierbei sind die Fügepartner zu einem Laser derart angeordnet, dass Fügeflächen der Fügepartner durch den Laser erhitzt werden. Danach werden die Formteile durch eine Drehbewegung bewegt, so dass die Fügeflächen der Fügepartner aneinander positioniert werden, um diese zusammenzufügen.

### Aufgabe der vorliegenden Erfindung

Die Aufgabe der vorliegenden Erfindung besteht nunmehr darin, eine Vorrichtung und ein Verfahren zum Zusammenfügen von Kunststoffteilen zur Verfügung zu stellen, mit dem Kunststoffteile, insbesondere für Baugruppen mit Elektronikkomponenten im Inneren, in einfacher, effizienter und kostengünstiger Weise miteinander verbunden werden können und womit die Nachteile aus dem Stand der Technik überwunden werden.

### Erfindungsgemäße Lösung

Die vorstehende Aufgabe wird durch die gesamte Lehre des Anspruchs 1 sowie durch den nebengeordneten Anspruch gelöst. Zweckmäßige Ausgestaltungen der Erfindung sind in den Unteransprüchen beansprucht.

Die vorliegende Erfindung beansprucht eine Vorrichtung zum Zusammenfügen von zwei Fügepartnern, insbesondere zum Verschweißen der Fügepartner mittels Wärmeeintrag bzw. zum quasisimultanen Laserschweißen von Kunststoffteilen. Hierzu umfasst die Vorrichtung eine erste Wärmequelle, die angeordnet ist, um eine Fügefläche des ersten Fügepartners zu erhitzen, und eine zweite Wärmequelle, die angeordnet ist, um eine Fügefläche des zweiten Fügepartners zu erhitzen. Ferner sind eine erste Bauteilaufnahme zur Aufnahme des ersten Fügepartners und eine zweite Bauteilaufnahme zur Aufnahme des zweiten Fügepartners vorgesehen, wobei die erste Bauteilaufnahme um eine erste Rotationsachse rotierbar angeordnet ist und die zweite Bauteilaufnahme um eine zweite Rotationsachse rotierbar angeordnet ist. Dabei ist die erste Bauteilaufnahme zumindest im Wesentlichen senkrecht bzw. orthogonal zur zweiten Bauteilaufnahme angeordnet, sodass auch die erste Rotationsachse und die zweite Rotationsachse im Wesentlichen senkrecht zueinander angeordnet sind. Die erste Bauteilaufnahme weist zudem eine Heizposition auf, in der der erste Fügepartner derart zur ersten Wärmequelle angeordnet ist, dass die Fügefläche des ersten Fügepartners durch die erste Wärmequelle erhitzbar ist. Demgemäß weist auch die zweite Bauteilaufnahme eine Heizposition auf, in der der zweite Fügepartner derart zur zweiten Wärmequelle angeordnet ist, dass die Fügefläche des zweiten Fügepartners durch die zweite Wärmequelle erhitzbar ist. Die Vorrichtung kann dann den ersten und den zweiten Fügepartner insbesondere nach der Erhitzung zusammenfügen, indem eine Fügeposition vorgesehen ist, in der die Fügeflächen des ersten und des zweiten Fügepartners gegenüberliegend angeordnet sind, und die erste Bauteilaufnahme um die erste Rotationsachse rotiert wird bzw. rotierbar ist, sodass sich der erste Fügepartner in der Fügeposition befindet, und die zweite Bauteilaufnahme um die zweite Rotationsachse rotiert wird bzw. rotierbar ist, sodass sich auch der zweite Fügepartner in der Fügeposition befindet. Die Fügeflächen werden dabei zusammengeführt, indem eine Fügeeinheit vorgesehen ist, welche die erste Bauteilaufnahme oder ein Teil der ersten Bauteilaufnahme oder die zweite Bauteilaufnahme oder ein Teil der zweiten Bauteilaufnahme bewegen kann (z. B. dass die erste Bauteilaufnahme oder ein Teil der ersten Bauteilaufnahme auf die zweite Bauteilaufnahme zubewegt werden kann oder die zweite Bauteilaufnahme oder ein Teil der zweiten Bauteilaufnahme auf die erste Bauteilaufnahme zubewegt werden kann), wobei die Fügeflächen durch die Bewegung der Fügeeinheit in Kontakt gebracht werden bzw. in Kontakt bringbar sind.

Vorzugsweise können die Fügeflächen zusammengeführt werden, indem die Fügeeinheit die erste Bauteilaufnahme oder ein Teil der ersten Bauteilaufnahme in Richtung entlang der ersten Rotationsachse oder entlang der zweiten Rotationsachse bewegt wird, so dass die Fügefläche des ersten Fügepartners mit der Fügefläche des zweiten Fügepartners in Kontakt gebracht wird.

Alternativ oder zusätzlich können die Fügeflächen auch zusammengeführt werden, indem die bzw. eine Fügeeinheit die zweite Bauteilaufnahme oder einen Teil der zweiten Bauteilaufnahme in Richtung entlang der ersten Rotationsachse oder entlang der zweiten Rotationsachse bewegt, so dass die Fügefläche des ersten Fügepartners mit der Fügefläche des zweiten Fügepartners in Kontakt gebracht wird.

Vorzugsweise ist als erste Wärmequelle ein Laser und/oder als zweite Wärmequelle ein Laser vorgesehen. Darüber hinaus können auch sämtliche aus dem Stand der Technik bekannte Vorrichtungen, die zum Erwärmen der Fügeflächen geeignet sind, als Wärmequelle vorgesehen sein.

Ferner können die Bauteilaufnahmen jeweils mehrere Fügepartner aufnehmen können, insbesondere jeweils zwei oder vier Fügepartner oder mehr. Dementsprechend können die Bauteilaufnahmen auch mehrere Bauteilsitze aufweisen. Daraus resultiert der Vorteil, dass die Fügepartner parallel bzw. quasisimultan beladen, beheizt, zusammengefügt und entladen werden können. Gemäß einer vorteilhaften Ausgestaltung kann die Bauteilaufnahme einen Drehtisch bzw. Rundtellertisch umfassen, der um die Rotationsachse rotierbar angeordnet ist. Der Drehtisch kann dabei jegliche Form (rund, viereckig, sechseckig oder dergleichen) und jegliche Dicke aufweisen. Ferner kann der Drehtisch z. B. über einen Elektromotor, insbesondere Stellmotor, oder über eine Hydrauliksteuerung angetrieben werden.

Zweckmäßigerweise kann die Bauteilaufnahme zumindest einen Bauteilsitz zur Aufnahme eines Fügepartners umfassen.

In vorteilhafter Weise kann der Bauteilsitz eine zur Aufnahme geeignete Bauteil-Fixierung umfassen, insbesondere einen Vakuumsauger, einen Magnetmechanismus oder eine Klemmvorrichtung, um das Bauteil bzw. den Fügepartner sicher zu halten. Ferner ist es dadurch möglich, dass die Bauteile auch "über Kopf" am Drehtisch transportierbar sind, ohne dass sich diese vom Bauteilsitz lösen.

Vorzugsweise umfasst die Fügeeinheit einen Stempel, der den Drehtisch oder den Bauteilsitz kontaktiert, und eine Fügekraft auf den Stempel übertragen wird, so dass der Drehtisch und/oder der Bauteilsitz in Richtung entlang der ersten Rotationsachse bewegt wird.

Zweckmäßigerweise kann die Fügeeinheit einen motorgetriebenen oder einen hydraulischen Antrieb umfassen.

Gemäß einer bevorzugten Ausgestaltung der Erfindung kann eine Bauteilaufnahme horizontal und eine Bauteilaufnahme vertikal angeordnet werden.

Ferner können auch zwei vertikal und gegenüberliegend angeordnete Bauteilaufnahmen vorgesehen sein. Dementsprechend kann auch eine zusätzliche Wärmequelle für die zusätzliche zweite vertikale Bauteilaufnahme vorgesehen sein.

Zweckmäßigerweise kann für jede Wärmequelle ein separates Überwachungssystem, insbesondere eine Wärmebildkamera, vorgesehen sein, um das Aufheizen der Fügepartner separat zu überwachen. Daraus resultiert der Vorteil, dass die Überwachung besonders genau stattfinden kann, da jedes Bauteil einzeln überwacht wird und individuell auf Fehler regiert werden kann (z. B. das nur die Leistung in einer Wärmequelle verändert wird).

Ferner können die Bauteilaufnahmen jeweils eine eigene Fügeeinheit aufweisen, wobei die Fügeflächen der Fügepartner dadurch zusammengeführt werden, dass jede Fügeeinheit die jeweilige Bauteilaufnahme oder einen Teil dieser bewegt, so dass die Fügeflächen durch die Bewegung der Fügeeinheiten in Kontakt gebracht werden. Daraus resultiert der Vorteil, dass eine Taktzeiteinsparung erfolgen kann, wobei die Aufheizphase bzw. die Erwärmung z. B. verkürzt werden kann.

Neben- oder untergeordnet beansprucht die Erfindung zudem ein Verfahren zum Zusammenfügen von zwei Fügepartnern. Insbesondere erfolgt dies anhand einer erfindungsgemäßen Vorrichtung. Das Verfahren weist dabei folgende Verfahrensschritte auf:
- Beladen einer ersten Bauteilaufnahme mit dem ersten Fügepartner und einer zweiten Bauteilaufnahme mit dem zweiten Fügepartner;
- Positionieren der ersten Bauteilaufnahme um eine erste Rotationsachse in eine Heizposition, in der der erste Fügepartner derart zur ersten Wärmequelle angeordnet ist, dass die Fügefläche des ersten Fügepartners durch die erste Wärmequelle erhitzt wird und Positionieren der zweiten Bauteilaufnahme um eine zweite Rotationsachse in eine Heizposition, in der der zweite Fügepartner derart zur zweiten Wärmequelle angeordnet ist, dass die Fügefläche des zweiten Fügepartners durch die zweite Wärmequelle erhitzt wird;
- Erwärmung, indem eine erste Wärmequelle vorgesehen bzw. angeordnet ist, um die Fügefläche des ersten Fügepartners zu erhitzen, und eine zweite Wärmequelle angeordnet ist, um die Fügefläche des zweiten Fügepartners zu erhitzen;
- Rotieren der ersten Bauteilaufnahme um die erste Rotationsachse, sodass sich der erste Fügepartner in einer Fügeposition befindet, und Rotieren der zweiten Bauteilaufnahme um die zweite Rotationsachse, sodass sich auch der zweite Fügepartner in einer Fügeposition befindet, wobei die Fügeflächen des ersten und des zweiten Fügepartners in der Fügeposition gegenüberliegend angeordnet sind;
- Zusammenfügen des ersten Fügepartners und des zweiten Fügepartners, indem die Fügeflächen durch eine Bewegung der ersten Bauteilaufnahme oder eines Teils der ersten Bauteilaufnahme oder der zweite Bauteilaufnahme oder eines Teils der zweiten Bauteilaufnahme in Kontakt gebracht werden. Beispielsweise kann hierzu eine Fügeeinheit vorgesehen sein, welche die Fügefläche des ersten Fügepartners durch eine Bewegung der ersten Bauteilaufnahme oder eines Teils der ersten Bauteilaufnahme entlang der ersten Rotationsachse mit der Fügefläche des zweiten Fügepartners in Kontakt bringt. Ferner könnte auch die Fügefläche des zweiten Fügepartners durch eine Bewegung der zweiten Bauteilaufnahme oder eines Teils der zweiten Bauteilaufnahme entlang der ersten Rotationsachse mit der Fügefläche des zweiten Fügepartners in Kontakt gebracht werden. Darüber hinaus sind auch andere Konstellationen denkbar oder auch beidseitige Bewegungen (z. B. dadurch, dass jede Bauteilaufnahme eine Fügeeinheit aufweist); und
- Entladen der verbundenen Fügepartner.

Vorzugsweise können die Bauteilaufnahmen jeweils mehrere Fügepartner aufnehmen, insbesondere jeweils zwei, drei oder vier Fügepartner. Dementsprechend können die Bauteilaufnahmen auch mehrere Bauteilsitze aufweisen. Daraus resultiert der Vorteil, dass die Fügepartner parallel bzw. quasisimultan beladen, beheizt, zusammengefügt und entladen werden können.

In vorteilhafter Weise kann vor allem das Entladen und Beladen der Bauteilaufnahmen mit Fügepartnern parallel zur Erwärmung erfolgen, wobei zumindest ein Fügepartner erwärmt wird, während die Bauteilaufnahme parallel mit einem anderen Fügepartner beladen wird und/oder zwei verbundene Fügepartner entladen werden bzw. ein fertiges Kunststoffprodukt entladen wird.

Ferner kann die vorliegende Erfindung für die Herstellung einer Sensoreinheit mit einem Gehäuse, insbesondere einen Radar- oder Lidarsensor zur Umgebungserfassung für ein Fahrzeug bzw. ein Fortbewegungsmittel, genutzt werden. Das Gehäuse umfasst dabei zwei Fügepartner, die mit einer erfindungsgemäßen Vorrichtung oder mittels eines erfindungsgemäßen Verfahrens zusammengefügt wurden.

Im Sinne der Erfindung wird unter "entlang der Rotationsachse" insbesondere in Richtung der Rotationsachse bzw. der Längsausdehnung der Rotationsachse verstanden. Beispielsweise bedeutet das, dass wenn die Rotationsachse mittig durch die Bauteilaufnahme bzw. den Drehtisch der Bauteilaufnahme verläuft, können auch die Bauteilnester bzw. Bauteilsitze, die im äußeren Bereich des Drehtisches angeordnet sind, durch einen Fügehub entlang der Rotationsachse (d. h. in Richtung der Rotationsachse, also etwa senkrecht bzw. orthogonal zum Drehtisch) bewegt werden, um das Zusammenfügen bzw. Kontaktieren der Fügepartner zu bewirken.

In vorteilhafter Weise ermöglicht es die vorliegende Erfindung somit, ein Verfahren (Prozess) und eine Vorrichtung zu schaffen, womit zwei nicht-transparente Kunststoffteile auch unter Verwendung von Laser als Energie- bzw. Heizquelle (Laserschweißen) verschweißt werden können. Die Applikation kann dabei in Hinblick auf den Einsatz in der Serienproduktion für den Materialfluss und die Taktzeit in einfacher und kostengünstiger Weise optimiert werden: Durch die spezielle Ausgestaltung der Vorrichtung kann diese für den Serienbetrieb optimiert werden, indem die einzelnen Prozesse parallelisiert werden (quasisimultan). Insbesondere eignet sich das Verfahren auch zum Schweißen von Baugruppen mit Elektronik im Inneren, da diese durch den erfindungsgemäßen Verbindungsvorgang nicht beschädigt werden. Ferner handelt es sich hierbei um einen partikelfreien Prozess, wobei bekannte ESD-Anforderungen eigehalten werden. In vorteilhafter Weise kann somit die Robustheit der Lasertechnologie für das Schweißen von Kunststoffen genutzt werden, unabhängig von der Transparenz eines Fügepartners. Es kann dabei ein selektiver Wärmepfad an der Schweißschnittstelle gebildet werden. Zudem wird die Flexibilität der Technologie bei Änderungen des Teiledesigns erhöht, wobei keine zusätzlichen Werkzeugänderung oder Neuanfertigungen von Werkzeugen notwendig sind.

Die vorliegende Erfindung kann zudem beispielsweise in den folgenden Bereichen eingesetzt werden (explizit nicht einschränkende Auflistung): Automotive, Aerospatiale, Medizintechnik, Elektronik und darüber hinaus in allen Bereichen, in denen zwei Kunststoffteile verschweißt werden müssen, um ihre Funktion zu entfalten. Infolgedessen liefert die vorliegende Erfindung einen ganz besonderen Beitrag auf dem Gebiet des (Laser-) Schweißens von Kunststoffteilen.

### Beschreibung der Erfindung anhand von Ausführungsbeispielen

Im Folgenden wird die Erfindung anhand von zweckmäßigen Ausführungsbeispielen näher erläutert. Es zeigen:
Fig. 1: eine vereinfachte, schematische Darstellung einer Ausgestaltung einer erfindungsgemäßen Vorrichtung zum Laserschweißen von Kunststoffteilen, wobei (A) eine Schnittdarstellung durch die Mitte der Bauteilaufnahme 2 sowie die Frontale der Bauteilaufnahme 3 zeigt, (B) eine Schnittdarstellung durch die Mitte der Bauteilaufnahme 3 sowie die Frontale der Bauteilaufnahme 2 zeigt und (C) eine Schnittdarstellung durch die Mitten der Bauteilaufnahmen 2 und 3;
Fig. 2: eine vereinfachte, schematische Darstellung der Vorrichtung aus Fig. 1 mit dargestellten Rotationsachsen sowie eine Vergrößerungsdarstellung der Fügeposition der beiden Fügepartner 4 und 5;
Fig. 3: eine vereinfachte, schematische Darstellung einer Ausgestaltung einer horizontal angeordneten Bauteilaufnahme einer erfindungsgemäßen Vorrichtung;
Fig. 4: eine vereinfachte, schematische Darstellung einer Ausgestaltung einer vertikal angeordneten Bauteilaufnahme einer erfindungsgemäßen Vorrichtung, sowie
Fig. 5 eine vereinfachte schematische Darstellung eines Ablaufplans für eine erfindungsgemäße Vorrichtung mit drei Bauteilsitzen pro Bauteilaufnahme.

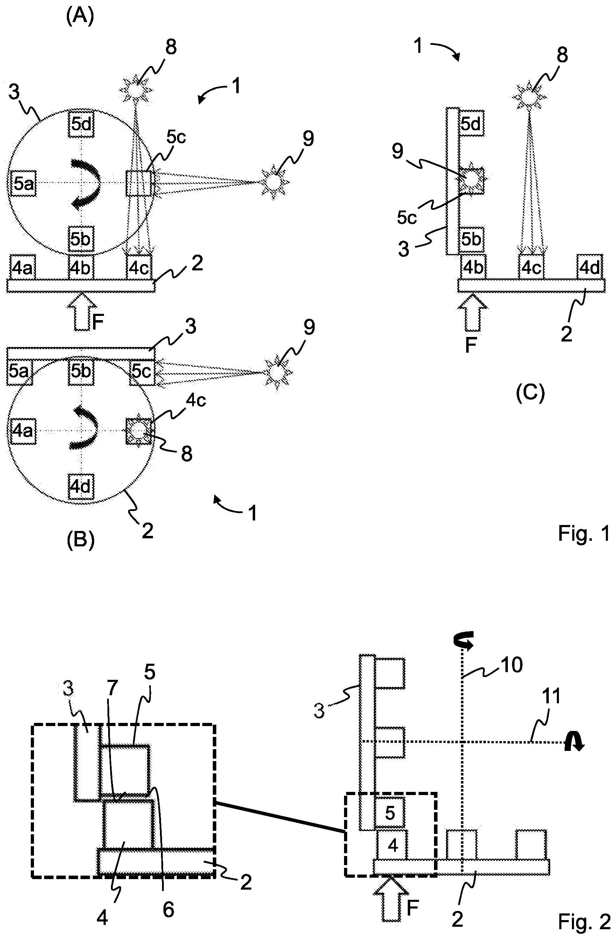

In Fig. 1 ist die erfindungsgemäße Vorrichtung 1 dargestellt. Die Vorrichtung 1 umfasst zwei Positioniersysteme bzw. eine erste Bauteilaufnahme 2 und eine zweite Bauteilaufnahme 3, welche hier aufgrund der Anordnung auch als horizontale Aufnahme und vertikale Aufnahme bezeichnet werden können. Die erste Bauteilaufnahme 2 dient zur Aufnahme des ersten Fügepartners 4 und die zweite Bauteilaufnahme 3 zur Aufnahme eines zweiten Fügepartners 5. Ferner sind die erste Bauteilaufnahme 2 und die zweite Bauteilaufnahme 3 derart konfiguriert, dass diese jeweils vier Bauteile oder Fügepartner 4a-4d bzw. 5a-5d aufnehmen können. Die Vorrichtung 1 ist dabei konfiguriert, die aus Kunststoff gefertigten Fügepartner 4, 5 entlang einer Fläche, der Fügefläche, zusammenzufügen. Die Fügefläche entsteht dabei aus Fügeflächen 6, 7 der Fügepartner 4, 5, an denen die Fügepartner 4, 5 miteinander verbunden werden. Die Fügeflächen 6, 7 können dabei eine durchgehende Fläche bilden oder auch Unterbrechungen oder Erhebungen aufweisen. Für den Fügevorgang umfasst die Vorrichtung 1 eine erste Wärmequelle in Form eines Lasers 8, die angeordnet ist, um die Fügefläche 6 des ersten Fügepartners 4 zu erhitzen, und eine zweite Wärmequelle in Form eines Lasers 9, die angeordnet ist, um die Fügefläche 7 des zweiten Fügepartners 5 zu erhitzen, d. h. die Fügeflächen 6, 7 werden dabei erwärmt, so dass diese ggf. schmelzen oder teilweise aufschmelzen, um dann miteinander verschweißt zu werden.

Die erste Bauteilaufnahme 2 ist dabei um eine erste Rotationsachse 10 rotierbar angeordnet und die zweite Bauteilaufnahme 3 ist um eine zweite Rotationsachse 11 rotierbar angeordnet. Die Rotation ist in den Fig. durch die dicken schwarzen Pfeile dargestellt, wobei die Rotationsrichtung je nach Anwendungsfall festlegbar ist. Da die Bauteilaufnahmen 2, 3 jeweils vier Bauteile bzw. Fügepartner aufnehmen können, muss die Bauteilaufnahme 2, 3 für eine Positionsänderung somit um etwa 90 Grad um die jeweilige Rotationsachse gedreht werden. Die erste Bauteilaufnahme 2 ist zumindest im Wesentlichen senkrecht zur zweiten Bauteilaufnahme 3 angeordnet, d. h. die Installationsebenen der flächig ausgestalteten Bauteilaufnahmen 2, 3 sind im Wesentlichen orthogonal zueinander angeordnet, sodass auch die erste Rotationsachse 10 und die zweite Rotationsachse 11 im Wesentlichen senkrecht bzw. rechtwinkelig (+/- einer Bauteiltoleranz von 0 Grad bis 5 Grad, insbesondere von 0 Grad bis 3 Grad) zueinander angeordnet sind. Die erste Bauteilaufnahme 2 sowie auch die zweite Bauteilaufnahme 3 weisen jeweils eine Heizposition auf, in der der jeweilige Fügepartner 4, 5 derart zum entsprechenden Laser 8, 9 angeordnet sind, dass deren Fügeflächen 6, 7 durch die Laser 8, 9 erhitzbar sind (in den Fig. dargestellt durch die schwarzen dünnen Pfeile).

Ferner werden der erste Fügepartner 4 und der zweite Fügepartner 5 nach der Erhitzung zusammengeführt, indem eine Fügeposition vorgesehen ist, in der die Fügeflächen 6, 7 des ersten Fügepartners 4 und des zweiten Fügepartners 5 gegenüberliegend angeordnet sind. Hierzu wird die erste Bauteilaufnahme 2 um die erste Rotationsachse 10 um 90 Grad rotiert, sodass sich der erste Fügepartner 4 in der Fügeposition befindet, und die zweite Bauteilaufnahme 3 wird 90 Grad um die zweite Rotationsachse 11 rotiert, sodass sich auch der zweite Fügepartner 5 in der Fügeposition befindet, sodass die Fügeflächen 6, 7 gegenüberliegend angeordnet sind, wie dies in Fig. 2 näher dargestellt ist. Die Fügeflächen 6, 7 können dann zusammengeführt werden, indem die erste Bauteilaufnahme 2 oder ein Teil der ersten Bauteilaufnahme 2 bewegbar entlang der ersten Rotationsachse 10 angeordnet ist, wobei die erste Fügefläche 6 durch eine Bewegung (dargestellt durch den weißen Pfeil) der ersten Bauteilaufnahme 2 oder eines Teils der ersten Bauteilaufnahme 2 entlang der ersten Rotationsachse 10 mit der zweiten Fügefläche 7 des zweiten Fügepartners 5 in Kontakt gebracht wird.

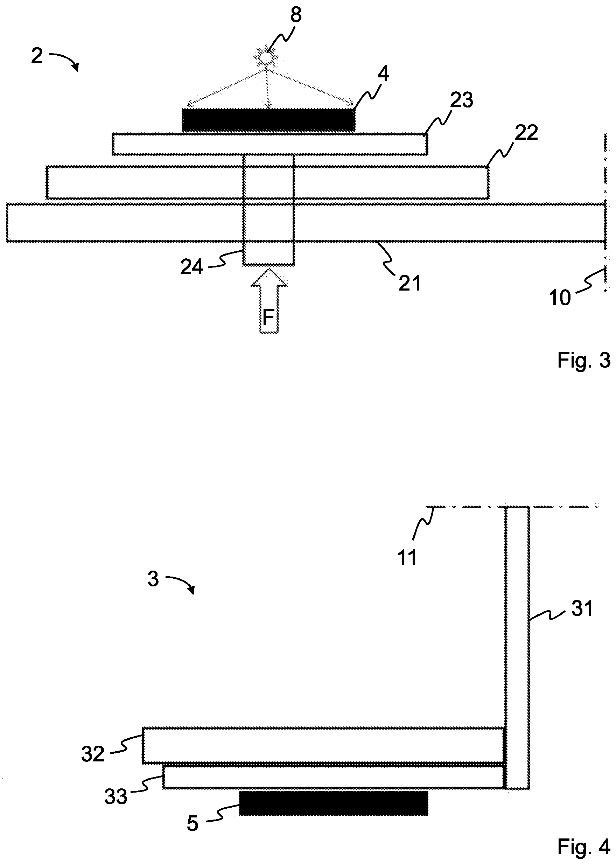

Die horizontale Aufnahme bzw. erste Bauteilaufnahme 2 umfasst, wie in Fig. 3 dargestellt, einen (horizontal angeordneten) Drehtisch 21, der um die erste Rotationsachse 10 rotierbar angeordnet ist, ggf. eine Grundplatte 22 für einen Bauteilsitz, einen Bauteilsitz 23, der den ersten Fügepartner trägt, und einen Stempel 24 zur Krafteinleitung und damit zur Fügebewegung (Fügehub), der z. B. über einen Motor oder hydraulisch angetrieben werden kann. Die Krafteinleitung (dargestellt durch den Pfeil F) erfolgt dabei vorzugsweise durch eine stationär montierte Fügeeinheit von unten. Die erste Bauteilaufnahme 2 umfasst somit eine geführte Bauteilaufnahme, um einen präzisen Fügehub zu gewährleisten, d. h. hier wird nicht die ganze Bauteilaufnahme 2 entlang der ersten Rotationsachse 10 in Richtung des zweiten Fügepartners bewegt, sondern nur der Bauteilsitz 23 mit dem ersten Fügepartner 4.

Die vertikale Aufnahme bzw. bzw. zweite Bauteilaufnahme 2 umfasst, wie in Fig. 4 dargestellt, einen (vertikal angeordneten) Drehtisch 31, der um die zweite Rotationsachse 11 rotierbar angeordnet ist, ggf. eine Grundplatte 32 für einen Bauteilsitz und einen Bauteilsitz 33, der den zweiten Fügepartner 5 trägt. Der Bauteilsitz 33 ist dabei vorzugsweise derart konfiguriert, dass er eine zur Aufnahme geeignete Bauteil-Fixierung (in den Fig. der Übersichtlichkeit halber nicht dargestellt), z. B. einem Vakuumsauger, einem magnetischen Mechanismus (insbesondere bei nichtmetallischen Kunststoffen mit permanentmagnetischen Eigenschaften oder mit Kunststoff umspritzten magnetischen Stoffen) oder einem Klemmmechanismus, umfasst, um das Bauteil bzw. den zweiten Fügepartner 5 zu halten und der Schwer- und Fliehkraft entgegen zu wirken.

Die Fügebewegung ist hierbei explizit nicht auf eine Fügebewegung von "unten nach oben" (auf die Darstellung in den Figuren bezogen) beschränkt, insbesondere könnte auch die erste Bauteilaufnahme vertikal und die zweite Bauteilaufnahme horizontal angeordnet sein, so dass die Fügebewegung von "oben nach unten" kommen würde gerichtet wäre (auf die Darstellung in den Figuren bezogen würde das bedeuten, dass Fügepartner 5 mit Bauteilaufnahme 33 nach unten gegen den Fügepartner 4 gedrückt würde). Darüber hinaus ist es auch möglich, dass beide Bauteilaufnahmen mittels einer Fügeeinheit jeweils eine Fügebewegung (nacheinander oder gleichzeitig) vollzeihen, d. h. eine beidseitige Bewegung, wobei z. B. jede Bauteilaufnahme eine Fügeeinheit aufweist.

Durch die Auftrennung der einzelnen Prozesse in einzelne Prozessstationen ist ein taktzeitoptimierter Serienbetrieb möglich, da z. B. das Ent- und Beladen der Bauteilaufnahmen 2, 3 parallel zum (Laser)-Aufheizprozess läuft (sozusagen quasisimultan). Ferner sind die bestehenden Verfahren zum Schweißen von Kunststoffen von nicht-transparenten Teilen (z. B. Heißgasschweißen oder Infrarotschweißen), bei denen die Energiequelle nicht die Schweißoberfläche berührt, nicht in der Lage, die Energie bzw. die Wärme direkt auf die Schweißoberfläche zu fokussieren. Demgegenüber haben die Verfahren, die in der Lage sind, die Energie/Wärme direkt auf die Schweißoberfläche zu fokussieren (z. B. Ultraschallschweißen oder Reibschweißen), den Nachteil, dass sie eine Menge Partikel erzeugen und/oder potenziell elektronische Komponenten beschädigen können, wenn die Baugruppe diese enthält. Demgegenüber betrifft die vorgeschlagene Erfindung insbesondere ein selektives Kunststoffschweißverfahren, bei dem die Energie/Wärme direkt auf die Schweißgrenzfläche bzw. die Fügefläche(n) fokussiert wird.

Das erfindungsgemäße Verfahren umfasst dabei die Verfahrensschritte Laser-Erwärmung (Heating), Positionieren bzw. Rotieren (Switching), Verpressen und Abkühlen (Clamping and Cooling) sowie das Be- und Entladen (Loading/Unloading) der Bauteile bzw. Fügepartner.

Bei der Laser-Erwärmung werden die beiden zu verschweißenden Teile bzw. Fügepartner 4, 5 aufgeheizt bzw. erwärmt. Die Erwärmung sollte dabei im richtigen Winkel für jeden Fügepartner spezifisch erfolgen - hierzu können die Laser 8, 9 entsprechend angeordnet werden bzw. können auch beweglich ausgeführt sein. Für jeden Fügepartner 4, 5 ist daher ein eigenes Laserequipment vorgesehen, damit die notwendigen Prozessparameter selektiv und unabhängig eingestellt werden können. Zudem kann jeweils ein Überwachungssystem, z. B. in Form von Wärmebildkameras (in den Fig. nicht dargestellt), adaptiert werden, um die beiden Aufheizprozesse zu überwachen und eventuell auftretende negative Einflüsse zu erkennen.

Nach dem Beenden des Aufheizens, insbesondere dem Ausschalten des Lasers, werden beide Fügepartner 4, 5 beim Positionieren mit einer rotierenden Bewegung (über den Rundschaltteller bzw. Drehtisch 21, 31) in die Fügeposition bewegt, bis die beiden erwärmten Fügepartner 4, 5 einander gegenüberstehen, sich aber noch nicht berühren (d. h. die Bauteilaufnahmen 2, 3 werden hierzu jeweils um 90 Grad rotiert).

Zweckmäßigerweise ist eine Fügeeinheit vorgesehen, die es dann erlaubt, in der Fügeposition mit variablen Fügegeschwindigkeiten und Fügekräften den optimalen "Verpress-Vorgang" der aufgeschmolzenen Flächen einzustellen (Verpressen) und zu überwachen. In diesem Stadium müssen die Fügepartner 4, 5 so lange verbleiben (d. h. aneinander gepresst verbleiben), bis das erhitzte Material nicht mehr von selbst oder aufgrund des fehlenden Drucks zwischen den Bauteilen verformt werden kann und sich somit die beiden Bauteile dauerhaft stoffschlüssig verbunden haben (Abkühlen). Hierbei kann auch eine aktive Abkühlung (z. B. mittels Luftstromkühlung) vorgesehen sein.

Beim Be- und Entladen erfolgt das Einlegen der beiden Fügepartner für den automatisierten Materialfluss vorzugsweise durch geeignete Handlingsysteme, z. B. Industrieroboter oder Achsportale in einer freien Bauteilaufnahme (z. B. in den Figuren an der Position von Bauteilsitz für Fügepartner 4c/4d oder 5c/5d - abhängig der Anzahl der verwendete Bauteilsitze und abhängig vom verwendeten Positionierungssystem).

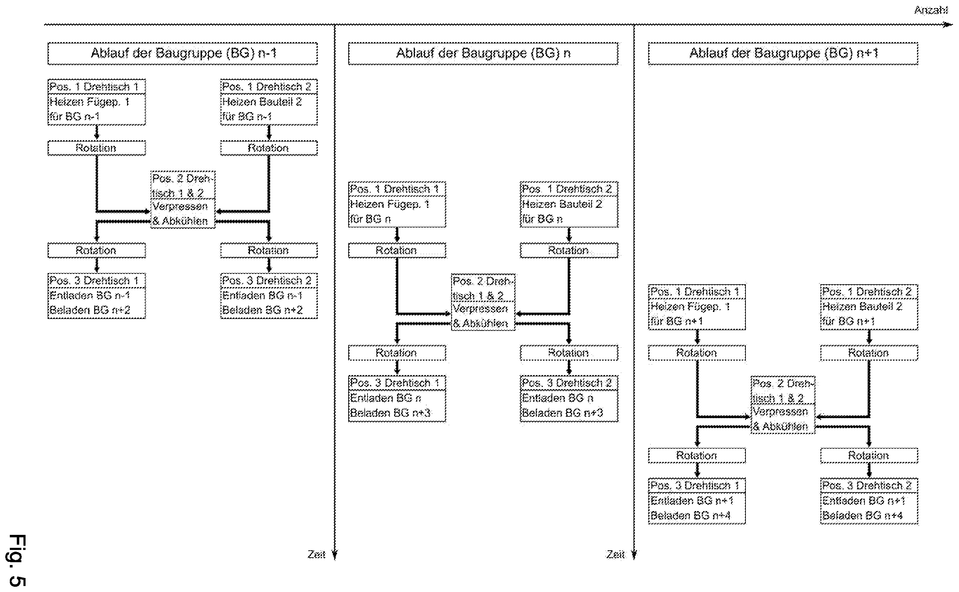

In Fig. 5 ist ein Ablaufplan des erfindungsgemäßen Verfahrens exemplarisch für ein System bzw. eine Vorrichtung mit zwei Bauteilaufnahmen gezeigt, bei dem jede Bauteilaufnahme drei Bauteile bzw. Fügepartner aufnehmen kann, d. h. jeweils drei Bauteilsitze aufweist. Für eine Positionsänderung wird der jeweilige Drehtisch somit um 120 Grad gedreht.

Ferner ist es auch denkbar, anstatt der beiden Drehtische 21, 31, andere Warenträgerumlaufsysteme zu verwenden (wie z. B. frei programmierbares Antriebssystem mit Linearmotortechnik, auf dem z. B. eine variable Anzahl von "Movern" unabhängig voneinander in einer Endlosschleife fahren können). Die Anzahl der verwendeten Bauteilsitze 23, 33 (sogenannte "Stationen" oder "Nester") auf den Drehtischen 21, 31 sowie die Rotationsrichtungen der Warenträgersysteme sind variabel wählbar und für den Einsatzfall anpassbar. Die räumliche Anordnung/Orientierung des Fügeaufbaus im Raum ist variabel und kann ebenfalls für den jeweiligen Anwendungsfall angepasst werden.

### Bezugszeichenliste

- 1: Vorrichtung zum Zusammenfügen
- 2: (erste) Bauteilaufnahme
- 3: (zweite) Bauteilaufnahme
- 4, 4a-4d: (erster) Fügepartner
- 5, 5a-5d: (zweiter) Fügepartner
- 6: Fügefläche
- 7: Fügefläche
- 8: Laser
- 9: Laser
- 10: erste Rotationsachse
- 11: zweite Rotationsachse
- 21: Drehtisch
- 22: Grundplatte
- 23: Bauteilsitz
- 24: Stempel
- 31: Drehtisch
- 32: Grundplatte
- 33: Bauteilsitz

## Patentansprüche

1. Vorrichtung (1) zum Zusammenfügen von einem ersten Fügepartner (4) und einem zweiten Fügepartner (5), umfassend
eine erste Wärmequelle, die angeordnet ist, um eine Fügefläche (6) des ersten Fügepartners (4) zu erhitzen, und
eine zweite Wärmequelle, die angeordnet ist, um eine Fügefläche (7) des zweiten Fügepartners (5) zu erhitzen, wobei
eine erste Bauteilaufnahme (2) zur Aufnahme des ersten Fügepartners (4) und eine zweite Bauteilaufnahme (3) zur Aufnahme des zweiten Fügepartners (5) vorgesehen sind, und
die erste Bauteilaufnahme (2) um eine erste Rotationsachse (10) rotierbar angeordnet ist und die zweite Bauteilaufnahme (3) um eine zweite Rotationsachse (11) rotierbar angeordnet ist, wobei
die erste Bauteilaufnahme (2) derart zur zweiten Bauteilaufnahme (3) angeordnet ist, dass die erste Rotationsachse (10) und die zweite Rotationsachse (11) im Wesentlichen senkrecht zueinander sind, und
die erste Bauteilaufnahme (2) eine Heizposition aufweist, in der der erste Fügepartner (4) derart zur ersten Wärmequelle angeordnet ist, dass die Fügefläche (6) des ersten Fügepartners (4) durch die erste Wärmequelle erhitzbar ist, und
die zweite Bauteilaufnahme (3) eine Heizposition aufweist, in der der zweite Fügepartner (5) derart zur zweiten Wärmequelle angeordnet ist, dass die Fügefläche (7) des zweiten Fügepartners (5) durch die zweite Wärmequelle erhitzbar ist, und
der erste Fügepartner (4) und der zweite Fügepartner (5) zusammengeführt werden können, indem
eine Fügeposition vorgesehen ist, in der die Fügeflächen (6, 7) des ersten und des zweiten Fügepartners (4, 5) gegenüberliegend angeordnet sind, und
die erste Bauteilaufnahme (2) um die erste Rotationsachse (10) rotiert wird, sodass sich der erste Fügepartner (4) in der Fügeposition befindet, und die zweite Bauteilaufnahme (3) um die zweite Rotationsachse (11) rotiert wird, sodass sich auch der zweite Fügepartner (5) in der Fügeposition befindet, und
die Fügeflächen (6, 7) zusammengeführt werden können, indem eine Fügeeinheit vorgesehen ist, welche die erste Bauteilaufnahme (2) oder einen Teil der ersten Bauteilaufnahme (2) oder die zweite Bauteilaufnahme (3) oder einen Teil der zweiten Bauteilaufnahme (3) bewegen kann, wobei die Fügeflächen (6, 7) durch die Bewegung der Fügeeinheit in Kontakt gebracht werden.

2. Vorrichtung (1) nach Anspruch 1, **dadurch gekennzeichnet, dass** die Fügeflächen (6, 7) zusammengeführt werden, indem die Fügeeinheit die erste Bauteilaufnahme (2) oder einen Teil der ersten Bauteilaufnahme (2) in Richtung entlang der ersten Rotationsachse (10) oder entlang der zweiten Rotationsachse (11) bewegt, so dass die Fügefläche (6) des ersten Fügepartners (4) mit der Fügefläche (7) des zweiten Fügepartners (5) in Kontakt gebracht wird.

3. Vorrichtung (1) nach Anspruch 1 oder 2, **dadurch gekennzeichnet, dass** die Fügeflächen (6, 7) zusammengeführt werden, indem die Fügeeinheit die zweite Bauteilaufnahme (3) oder einen Teil der zweiten Bauteilaufnahme (3) in Richtung entlang der ersten Rotationsachse (10) oder entlang der zweiten Rotationsachse (11) bewegt, so dass die Fügefläche (6) des ersten Fügepartners (4) mit der Fügefläche (7) des zweiten Fügepartners (5) in Kontakt gebracht wird.

4. Vorrichtung (1) nach einem der vorhergehenden Ansprüche, **dadurch gekennzeichnet, dass** als erste Wärmequelle ein Laser (8) und/oder als zweite Wärmequelle ein Laser (9) vorgesehen ist.

5. Vorrichtung (1) nach einem der vorhergehenden Ansprüche, **dadurch gekennzeichnet, dass** die Bauteilaufnahmen (2, 3) jeweils mehrere Fügepartner (4a-4d, 5a-5d) aufnehmen können, insbesondere jeweils zwei oder vier Fügepartner (4a-4d, 5a-5d).

6. Vorrichtung (1) nach einem der vorhergehenden Ansprüche, **dadurch gekennzeichnet, dass** die Bauteilaufnahme (2, 3) einen Drehtisch (21, 31) umfasst, der um die Rotationsachse (10, 11) rotierbar angeordnet ist.

7. Vorrichtung (1) nach einem der vorhergehenden Ansprüche, **dadurch gekennzeichnet, dass** die Bauteilaufnahme (2, 3) zumindest einen Bauteilsitz (23, 33) zur Aufnahme eines Fügepartners (4, 5) umfasst.

8. Vorrichtung (1) nach Anspruch 7, **dadurch gekennzeichnet, dass** der Bauteilsitz (23, 33) zur Aufnahme geeignete Bauteil-Fixierung umfasst, insbesondere einen Vakuumsauger, einen Magnetmechanismus oder eine Klemmvorrichtung, um den Fügepartner (4, 5) zu halten.

9. Vorrichtung (1) nach einem der Ansprüche 6-8, **dadurch gekennzeichnet, dass** die Fügeeinheit einen Stempel (24) umfasst, der den Drehtisch (21) oder den Bauteilsitz (23) kontaktiert, und eine Fügekraft auf den Stempel (24) übertragen wird, so dass der Drehtisch (21) und/oder der Bauteilsitz (23) in Richtung entlang der ersten Rotationsachse (10) bewegt wird.

10. Vorrichtung (1) nach einem der vorhergehenden Ansprüche, **dadurch gekennzeichnet, dass** die Fügeeinheit einen motorgetriebenen oder einen hydraulischen Antrieb umfasst.

11. Vorrichtung (1) nach einem der vorhergehenden Ansprüche, **dadurch gekennzeichnet, dass** eine Bauteilaufnahme (2) horizontal und eine Bauteilaufnahme (3) vertikal angeordnet ist.

12. Vorrichtung (1) nach einem der vorhergehenden Ansprüche, **dadurch gekennzeichnet, dass** eine horizontal angeordnete Bauteilaufnahme (2) und zwei vertikal und gegenüberliegend angeordnete Bauteilaufnahmen vorgesehen sind.

13. Vorrichtung (1) nach einem der vorhergehenden Ansprüche, **dadurch gekennzeichnet, dass** für jede Wärmequelle ein separates Überwachungssystem, insbesondere eine Wärmebildkamera, vorgesehen ist, um das Aufheizen der Fügepartner (4, 5) separat zu überwachen.

14. Vorrichtung (1) nach einem der vorhergehenden Ansprüche, **dadurch gekennzeichnet, dass** die Bauteilaufnahmen (2, 3) jeweils eine Fügeeinheit aufweisen und die Fügeflächen (6, 7) zusammengeführt werden, indem jede Fügeeinheit die jeweilige Bauteilaufnahme oder einen Teil dieser bewegt, wobei die Fügeflächen (6, 7) durch die Bewegung der Fügeeinheiten in Kontakt gebracht werden.

15. Verfahren zum Zusammenfügen von einem ersten Fügepartner (4) und einem zweiten Fügepartner (5), mittels einer Vorrichtung (1) nach einem der vorhergehenden Ansprüche, wobei das Verfahren folgende Verfahrensschritte umfasst:
- Beladen einer ersten Bauteilaufnahme (2) mit dem ersten Fügepartner (4) und einer zweiten Bauteilaufnahme (3) mit dem zweiten Fügepartner (5), und
- Positionieren der ersten Bauteilaufnahme (2) um eine erste Rotationsachse (10) in eine Heizposition, in der der erste Fügepartner (4) derart zur ersten Wärmequelle angeordnet ist, dass die Fügefläche (6) des ersten Fügepartners (4) durch die erste Wärmequelle erhitzt wird und Positionieren der zweiten Bauteilaufnahme (3) um eine zweite Rotationsachse (11) in eine Heizposition, in der der zweite Fügepartner (5) derart zur zweiten Wärmequelle angeordnet ist, dass die Fügefläche (7) des zweiten Fügepartners (5) durch die zweite Wärmequelle erhitzt wird, und
- Erwärmung, indem eine erste Wärmequelle angeordnet ist, um die Fügefläche (6) des ersten Fügepartners (4) zu erhitzen, und eine zweite Wärmequelle angeordnet ist, um die Fügefläche (7) des zweiten Fügepartners (5) zu erhitzen,
- Rotieren der ersten Bauteilaufnahme (2) um die erste Rotationsachse (10), sodass sich der erste Fügepartner (4) in einer Fügeposition befindet, und Rotieren der zweiten Bauteilaufnahme (3) um die zweite Rotationsachse (11), sodass sich auch der zweite Fügepartner (5) in einer Fügeposition befindet, wobei die Fügeflächen (6, 7) des ersten und des zweiten Fügepartners (4, 5) in der Fügeposition gegenüberliegend angeordnet sind, und
- Zusammenfügen des ersten Fügepartners (4) und des zweiten Fügepartners (5), indem die erste Bauteilaufnahme (2) oder ein Teil der ersten Bauteilaufnahme (2) oder die zweite Bauteilaufnahme (3) oder ein Teil der zweiten Bauteilaufnahme (3) derart bewegt wird, dass die Fügeflächen (6, 7) dadurch in Kontakt gebracht werden, sowie
- Entladen der verbundenen Fügepartner (4, 5).

16. Verfahren nach Anspruch 15, **dadurch gekennzeichnet, dass** die Bauteilaufnahmen (2, 3) jeweils mehrere Fügepartner (4a-4d, 5a-5d) aufnehmen können, insbesondere jeweils zwei oder vier Fügepartner (4a-4d, 5a-5d).

17. Verfahren nach Anspruch 15 oder 16, **dadurch gekennzeichnet, dass** das Entladen und Beladen der Bauteilaufnahmen (2, 3) mit Fügepartnern (4a-4d, 5a-5d) parallel zur Erwärmung erfolgt, wobei zumindest ein Fügepartner (4c, 5c) erwärmt wird, während die Bauteilaufnahme (2, 3) parallel mit einem anderen Fügepartner (4d, 5d) beladen wird und/oder zwei verbundene Fügepartner entladen werden.

## Claims

1. Device (1) for joining together a first joining partner (4) and a second joining partner (5), comprising
a first heat source which is arranged so as to heat a joining surface (6) of the first joining partner (4), and
a second heat source which is arranged so as to heat a joining surface (7) of the second joining partner (5), wherein
provision is made of a first component receptacle (2) for receiving the first joining partner (4) and a second component receptacle (3) for receiving the second joining partner (5), and
the first component receptacle (2) is arranged so as to be rotatable about a first axis of rotation (10), and the second component receptacle (3) is arranged so as to be rotatable about a second axis of rotation (11), wherein
the first component receptacle (2) is arranged in relation to the second component receptacle (3) in such a way that the first axis of rotation (10) and the second axis of rotation (11) are substantially perpendicular to one another, and
the first component receptacle (2) has a heating position in which the first joining partner (4) is arranged in relation to the first heat source in such a way that the joining surface (6) of the first joining partner (4) is able to be heated by the first heat source, and the second component receptacle (3) has a heating position in which the second joining partner (5) is arranged in relation to the second heat source in such a way that the joining surface (7) of the second joining partner (5) is able to be heated by the second heat source, and
the first joining partner (4) and the second joining partner (5) can be brought together in that
provision is made of a joining position in which the joining surfaces (6, 7) of the first and second joining partners (4, 5) are arranged opposite one another, and the first component receptacle (2) is rotated about the first axis of rotation (10) so that the first joining partner (4) is in the joining position, and the second component receptacle (3) is rotated about the second axis of rotation (11) so that the second joining partner (5) is also in the joining position, and
the joining surfaces (6, 7) can be brought together in that provision is made of a joining unit which can move the first component receptacle (2), or a part of the first component receptacle (2), or the second component receptacle (3), or a part of the second component receptacle (3), wherein the joining surfaces (6, 7) are brought into contact by the movement of the joining unit.

2. Device (1) according to Claim 1, **characterized in that** the joining surfaces (6, 7) are brought together **in that** the joining unit moves the first component receptacle (2) or a part of the first component receptacle (2) in the direction along the first axis of rotation (10) or along the second axis of rotation (11) so that the joining surface (6) of the first joining partner (4) is brought into contact with the joining surface (7) of the second joining partner (5).

3. Device (1) according to Claim 1 or 2, **characterized in that** the joining surfaces (6, 7) are brought together **in that** the joining unit moves the second component receptacle (3) or a part of the second component receptacle (3) in the direction along the first axis of rotation (10) or along the second axis of rotation (11) so that the joining surface (6) of the first joining partner (4) is brought into contact with the joining surface (7) of the second joining partner (5).

4. Device (1) according to one of the preceding claims, **characterized in that** a laser (8) is provided as the first heat source and/or a laser (9) is provided as the second heat source.

5. Device (1) according to one of the preceding claims, **characterized in that** the component receptacles (2, 3) can receive in each case multiple joining partners (4a-4d, 5a-5d), in particular in each case two or four joining partners (4a-4d, 5a-5d).

6. Device (1) according to one of the preceding claims, **characterized in that** the component receptacle (2, 3) comprises a rotary table (21, 31) which is arranged so as to be rotatable about the axis of rotation (10, 11).

7. Device (1) according to one of the preceding claims, **characterized in that** the component receptacle (2, 3) comprises at least one component seat (23, 33) for receiving a joining partner (4, 5).

8. Device (1) according to Claim 7, **characterized in that** the component seat (23, 33) comprises a component fixing means which is suitable for receiving, in particular a vacuum cup, a magnetic mechanism or a clamping device, in order to hold the joining partner (4, 5).

9. Device (1) according to one of Claims 6-8, **characterized in that** the joining unit comprises a ram (24) which makes contact with the rotary table (21) or the component seat (23), and a joining force is transmitted to the ram (24) so that the rotary table (21) and/or the component seat (23) are/is moved in the direction along the first axis of rotation (10).

10. Device (1) according to one of the preceding claims, **characterized in that** the joining unit comprises a motor-driven or a hydraulic drive.

11. Device (1) according to one of the preceding claims, **characterized in that** one component receptacle (2) is arranged horizontally and one component receptacle (3) is arranged vertically.

12. Device (1) according to one of the preceding claims, **characterized in that** provision is made of a horizontally arranged component receptacle (2) and two vertically and oppositely arranged component receptacles.

13. Device (1) according to one of the preceding claims, **characterized in that**, for each heat source, provision is made of a separate monitoring system, in particular a thermal imaging camera, in order for the heating of the joining partners (4, 5) to be monitored separately.

14. Device (1) according to one of the preceding claims, **characterized in that** the component receptacles (2, 3) have in each case one joining unit and the joining surfaces (6, 7) are brought together **in that** each joining unit moves the respective component receptacle or a part thereof, wherein the joining surfaces (6, 7) are brought into contact by the movement of the joining units.

15. Method for joining together a first joining partner (4) and a second joining partner (5) by means of a device (1) according to one of the preceding claims, wherein the method comprises the following method steps:
- loading a first component receptacle (2) with the first joining partner (4) and a second component receptacle (3) with the second joining partner (5), and
- positioning the first component receptacle (2) into a heating position about a first axis of rotation (10), in which heating position the first joining partner (4) is arranged in relation to the first heat source in such a way that the joining surface (6) of the first joining partner (4) is heated by the first heat source, and positioning the second component receptacle (3) into a heating position about a second axis of rotation (11), in which heating position the second joining partner (5) is arranged in relation to the second heat source in such a way that the joining surface (7) of the second joining partner (5) is heated by the second heat source, and
- heating in that a first heat source is arranged so as to heat the joining surface (6) of the first joining partner (4) and a second heat source is arranged so as to heat the joining surface (7) of the second joining partner (5),
- rotating the first component receptacle (2) about the first axis of rotation (10) so that the first joining partner (4) is in a joining position, and rotating the second component receptacle (3) about the second axis of rotation (11) so that the second joining partner (5) is also in a joining position, wherein the joining surfaces (6, 7) of the first and second joining partners (4, 5) are arranged opposite one another in the joining position, and
- joining together the first joining partner (4) and the second joining partner (5) in that the first component receptacle (2), or a part of the first component receptacle (2), or the second component receptacle (3), or a part of the second component receptacle (3), is moved in such a way that the joining surfaces (6, 7) are thus brought into contact, and
- unloading the connected joining partners (4, 5).

16. Method according to Claim 15, **characterized in that** the component receptacles (2, 3) can receive in each case multiple joining partners (4a-4d, 5a-5d), in particular in each case two or four joining partners (4a-4d, 5a-5d).

17. Method according to Claim 15 or 16, **characterized in that** the unloading of joining partners (4a-4d, 5a-5d) from, and the loading thereof onto, the component receptacles (2, 3) is carried out in parallel with the heating, wherein at least one joining partner (4c, 5c) is heated while in parallel another joining partner (4d, 5d) is being loaded onto the component receptacle (2, 3) and/or two connected joining partners are being unloaded therefrom.

## Revendications

1. Dispositif (1) d'assemblage d'un premier partenaire d'assemblage (4) et d'un deuxième partenaire d'assemblage (5), comprenant
une première source de chaleur qui est agencée pour le chauffage d'une surface d'assemblage (6) du premier partenaire d'assemblage (4) et
une deuxième source de chaleur qui est agencée pour le chauffage d'une surface d'assemblage (7) du deuxième partenaire d'assemblage (5),
un premier logement (2) de pièce destiné à recevoir le premier partenaire d'assemblage (4) et un deuxième logement (3) de pièce destiné à recevoir le deuxième partenaire d'assemblage (5) étant prévus et
le premier logement (2) de pièce étant agencé rotatif autour d'un premier axe de rotation (10) et le deuxième logement (3) de pièce étant agencé rotatif autour d'un deuxième axe de rotation (11),
le premier logement (2) de pièce étant agencé par rapport au deuxième logement (3) de pièce de telle sorte que le premier axe de rotation (10) et le deuxième axe de rotation (11) sont sensiblement perpendiculaires l'un à l'autre et
le premier logement (2) de pièce présentant une position de chauffage dans laquelle le premier partenaire d'assemblage (4) est agencé par rapport à la première source de chaleur de telle sorte que la surface d'assemblage (6) du premier partenaire d'assemblage (4) peut être chauffée par la première source de chaleur et le deuxième logement (3) de pièce présentant une position de chauffage dans laquelle le deuxième partenaire d'assemblage (5) est agencé par rapport à la deuxième source de chaleur de telle sorte que la surface d'assemblage (7) du deuxième partenaire d'assemblage (5) peut être chauffée par la deuxième source de chaleur et
le premier partenaire d'assemblage (4) et le deuxième partenaire d'assemblage (5) pouvant être réunis par le fait que
une position d'assemblage est prévue, dans laquelle les surfaces d'assemblage (6, 7) du premier et du deuxième partenaire d'assemblage (4, 5) sont agencées l'une en face de l'autre et
le premier logement (2) de pièce est mis en rotation autour du premier axe de rotation (10) de telle sorte que le premier partenaire d'assemblage (4) se trouve dans la position d'assemblage et le deuxième logement (3) de pièce est mis en rotation autour du deuxième axe de rotation (11) de telle sorte que le deuxième partenaire d'assemblage (5) se trouve également dans la position d'assemblage et les surfaces d'assemblage (6, 7) peuvent être réunies par le fait qu'une unité d'assemblage est prévue qui peut déplacer le premier logement (2) de pièce ou une partie du premier logement (2) de pièce ou le deuxième logement (3) de pièce ou une partie du deuxième logement (3) de pièce, les surfaces d'assemblage (6, 7) étant amenées en contact par le déplacement de l'unité d'assemblage.

2. Dispositif (1) selon la revendication 1, **caractérisé en ce que** les surfaces d'assemblage (6, 7) sont réunies par le fait que l'unité d'assemblage déplace le premier logement (2) de pièce ou une partie du premier logement (2) de pièce dans une direction le long du premier axe de rotation (10) ou le long du deuxième axe de rotation (11) de telle sorte que la surface d'assemblage (6) du premier partenaire d'assemblage (4) est amenée en contact avec la surface d'assemblage (7) du deuxième partenaire d'assemblage (5).

3. Dispositif (1) selon la revendication 1 ou 2, **caractérisé en ce que** les surfaces d'assemblage (6, 7) sont réunies par le fait que l'unité d'assemblage déplace le deuxième logement (3) de pièce ou une partie du deuxième logement (3) de pièce dans une direction le long du premier axe de rotation (10) ou le long du deuxième axe de rotation (11) de telle sorte que la surface d'assemblage (6) du premier partenaire d'assemblage (4) est amenée en contact avec la surface d'assemblage (7) du deuxième partenaire d'assemblage (5).

4. Dispositif (1) selon l'une des revendications précédentes, **caractérisé en ce qu'**un laser (8) est prévu comme première source de chaleur et/ou un laser (9) est prévu comme deuxième source de chaleur.

5. Dispositif (1) selon l'une des revendications précédentes, **caractérisé en ce que** les logements (2, 3) de pièce peuvent recevoir à chaque fois plusieurs partenaires d'assemblage (4a-4d, 5a-5d), en particulier à chaque fois deux ou quatre partenaires d'assemblage (4a-4d, 5a-5d).

6. Dispositif (1) selon l'une des revendications précédentes, **caractérisé en ce que** le logement (2, 3) de pièce comprend une table tournante (21, 31) qui est agencée rotative autour de l'axe de rotation (10, 11).

7. Dispositif (1) selon l'une des revendications précédentes, **caractérisé en ce que** le logement (2, 3) de pièce comprend au moins un siège (23, 33) de pièce destiné à recevoir un partenaire d'assemblage (4, 5).

8. Dispositif (1) selon la revendication 7, **caractérisé en ce que** le siège (23, 33) de pièce comprend une fixation de pièce appropriée pour le logement, en particulier une ventouse à vide, un mécanisme magnétique ou un dispositif de serrage, destinée à tenir les partenaires d'assemblage (4, 5).

9. Dispositif (1) selon l'une des revendications 6-8, **caractérisé en ce que** l'unité d'assemblage comprend un poinçon (24) qui vient en contact avec la table tournante (21) ou avec le siège (23) de pièce et une force d'assemblage est transmise au poinçon (24) de telle sorte que la table tournante (21) et/ou le siège (23) de pièce est/sont déplacé(e)(s) le long du premier axe de rotation (10).

10. Dispositif (1) selon l'une des revendications précédentes, **caractérisé en ce que** l'unité d'assemblage comprend un entraînement à moteur ou hydraulique.

11. Dispositif (1) selon l'une des revendications précédentes, caractérisé en qu'un logement (2) de pièce est agencé horizontalement et un logement (3) de pièce est agencé verticalement.

12. Dispositif (1) selon l'une des revendications précédentes, **caractérisé en ce qu'**un logement (2) de pièce agencé horizontalement et deux logements de pièce agencés verticalement et l'un en face de l'autre sont prévus.

13. Dispositif (1) selon l'une des revendications précédentes, caractérisé en qu'un système de surveillance séparé, en particulier une caméra d'image thermique, est prévu pour chaque source de chaleur afin de surveiller séparément le chauffage des partenaires d'assemblage (4, 5).

14. Dispositif (1) selon l'une des revendications précédentes, **caractérisé en ce que** les logements (2, 3) de pièce présentent à chaque fois une unité d'assemblage et les surfaces d'assemblage (6, 7) sont réunies **en ce que** chaque unité d'assemblage déplace le logement de pièce respectif ou une partie de celui-ci, les surfaces d'assemblage (6, 7) étant amenées en contact par le déplacement des unités d'assemblage.

15. Procédé d'assemblage d'un premier partenaire d'assemblage (4) et d'un deuxième partenaire d'assemblage (5) au moyen d'un dispositif (1) selon l'une des revendications précédentes, le procédé comprenant les étapes de procédés suivantes :
- chargement d'un premier logement (2) de pièce par le premier partenaire d'assemblage (4) et d'un deuxième logement (3) de pièce par le deuxième partenaire d'assemblage (5) et
- positionnement du premier logement (2) de pièce autour d'un premier axe de rotation (10) dans une position de chauffage dans laquelle le premier partenaire d'assemblage (4) est agencé par rapport à la première source de chaleur de telle sorte que la surface d'assemblage (6) du premier partenaire d'assemblage (4) est chauffée par la première source de chaleur et positionnement du deuxième logement (3) de pièce autour d'un deuxième axe de rotation (11) dans une position de chauffage dans laquelle le deuxième partenaire d'assemblage (5) est agencé par rapport à la deuxième source de chaleur de telle sorte que la surface d'assemblage (7) du deuxième partenaire d'assemblage (5) est chauffée par la deuxième source de chaleur et
- chauffage par le fait qu'une première source de chaleur est agencée pour le chauffage de la surface d'assemblage (6) du premier partenaire d'assemblage (4) et une deuxième source de chaleur est agencée pour le chauffage de la surface d'assemblage (7) du deuxième partenaire d'assemblage (5),
- rotation du premier logement (2) de pièce autour du premier axe de rotation (10) de telle sorte que le premier partenaire d'assemblage (4) se trouve dans une position d'assemblage et rotation du deuxième logement (3) de pièce autour du deuxième axe de rotation (11) de telle sorte que le deuxième partenaire d'assemblage (5) se trouve également dans une position d'assemblage, les surfaces d'assemblage (6, 7) du premier et du deuxième partenaire assemblage (4, 5) étant agencées l'une en face de l'autre dans la position d'assemblage et
- assemblage du première partenaire d'assemblage (4) et du deuxième partenaire d'assemblage (5) par le fait que le premier logement (2) de pièce ou une partie du premier logement (2) de pièce ou le deuxième logement (3) de pièce ou une partie du deuxième logement (3) de pièce est déplacé(e) de telle sorte que les surfaces d'assemblage (6, 7) sont ainsi amenées en contact, ainsi que
- déchargement des partenaires d'assemblage (4, 5) reliés.

16. Procédé selon la revendication 15, **caractérisé en ce que** les logements (2, 3) de pièce peuvent recevoir à chaque fois plusieurs partenaires d'assemblage (4a-4d, 5a-5d), en particulier à chaque fois deux ou quatre partenaires d'assemblage (4a-4d, 5a-5d).

17. Procédé selon la revendication 15 ou 16, **caractérisé en ce que** le déchargement et le chargement des logements (2, 3) de pièce par des partenaires d'assemblage (4a-4d, 5a-5d) s'effectuent parallèlement au chauffage, au moins un partenaire d'assemblage (4c, 5c) étant chauffé pendant que le logement (2, 3) de pièce est chargé en parallèle par l'autre partenaire d'assemblage (4d, 5d) et/ou que deux partenaires d'assemblage reliés sont déchargés.
